Europäisches Patentamt

**European Patent Office**

Office européen des brevets

(11) Publication number: **0 291 886 B1**

(12) **EUROPEAN PATENT SPECIFICATION**

(45) Date of publication of patent specification: **04.11.92**

(51) Int. Cl.⁵: **B60G 17/02**, B60G 11/08, B60G 11/46

(21) Application number: **88107756.4**

(22) Date of filing: **13.05.88**

(54) **Suspension device.**

(30) Priority: **15.05.87 JP 118381/87**
**15.05.87 JP 118382/87**
**20.05.87 JP 75737/87 U**

(43) Date of publication of application:
**23.11.88 Bulletin 88/47**

(45) Publication of the grant of the patent:
**04.11.92 Bulletin 92/45**

(84) Designated Contracting States:
**DE FR GB IT SE**

(56) References cited:
**EP-A- 0 265 682      EP-A- 0 283 879**
**DE-A- 2 541 841      DE-A- 2 722 015**
**DE-A- 3 004 158      FR-A- 664 698**
**FR-A- 1 483 928      US-A- 3 140 083**
**US-A- 3 499 662      US-A- 4 619 467**

(73) Proprietor: **HONDA GIKEN KOGYO KABUSHIKI KAISHA**
**1-go, 1-ban, Minami-Aoyama 2-chome**
**Minato-ku Tokyo 107(JP)**

(72) Inventor: **Kajiwara, Hajime**
**c/o Honda R & D Co., Ltd. 4-1, Chuo 2-chome**
**Wako-shi Saitama(JP)**
Inventor: **Ogura, Masami**
**c/o Honda R & D Co., Ltd. 4-1, Chuo 2-chome**
**Wako-shi Saitama(JP)**
Inventor: **Sano, Shoichi**
**c/o Honda R & D Co., Ltd. 4-1, Chuo 2-chome**
**Wako-shi Saitama(JP)**
Inventor: **Kumata, Masataka**
**c/o Honda R & D Co., Ltd. 4-1, Chuo 2-chome**
**Wako-shi Saitama(JP)**

(74) Representative: **Prechtel, Jörg, Dipl.-Phys. Dr. et al**
**Patentanwälte H. Weickmann, Dr. K. Fincke F.A. Weickmann, B. Huber Dr. H. Liska, Dr. J. Prechtel Kopernikusstrasse 9 Postfach 86 08 20**
**W-8000 München 86(DE)**

## Description

The present invention relates to a suspension device for a motor vehicle.

Most damper assemblies found in recent suspension devices for use on motor vehicles or the like comprise a combination of a hydraulic damper and a coil spring. The spring constant of some of these damper assemblies can be varied by adjusting the length of the spring. When the motor vehicle with such a damper assembly runs from a paved road into rough terrain, the spring constant of the damper assembly is varied for a harder suspension setting.

The coil spring is disposed around the hydraulic damper. Therefore, the diameter of the entire damper assembly is large. If such a damper assembly is incorporated in a double-wishbone suspension, the damper assembly tends to interfere with the upper arm of the suspension to a greater extent.

One solution would be to position a leaf spring, for example, separate from the damper, between the wheel and the vehicle body. The leaf spring would extend transversely of the vehicle body and have its outer end supporting the wheel and its inner end fixed to the vehicle body for giving the wheel vertical resiliency. Preferably, the spring constant of a damper assembly of this design should also be variable. This requirement could be met by employing a mechanism for shifting the point where the inner end of the leaf spring is attached to the vhicle body in the transverse direction of the vehicle body and then fixing the point for thereby adjusting the effective length of the leaf spring. Such a mechanism would however be highly complex.

The present invention has been made in an effort to solve the aforesaid problem of the conventional suspension device having a damper assembly comprising a coil spring and a damper.

A suspension device according to the preamble of claim 1 is known from DE-A-2241841 and from EP-A-0283879 (state of the art according to Art. 54(3)), the latter further disclosing a container made of an expandable material filled with a non-compressible fluid or a container made of non-expandable material filled with a compressible fluid. The container is interposed between the resilient member and vehicle body and is connected to a pump for adjusting the vehicle height by increasing or reducing the fluid pressure within the container. After height-adjustment during spring operation, there is no pump action.

It is an object of the invention to provide a suspension device which includes a damper assembly having a spring, separate from a damper and which can vary the spring constant of the damper assembly during spring operation.

This object is solved by a suspension device according to claim 1. The mechanism regulates the internal pressure during spring operation so that the apparent spring constant can be actively varied to a large extent. In a preferred embodiment, the rate (dF/dW) is adjustable to different constant values. Further preferred embodiments are the subjects of claims 3 to 11.

The above and further objects, details and advantages of the present invention will become apparent from the following detailed description of preferred embodiments thereof, when read in conjunction with the accompanying drawings.

FIG. 1 is a schematic front elevational view of a suspension device;

FIG. 2 is a schematic front elevational view of the suspension device of FIG. 1, showing the manner in which the suspension device operates when the wheels bump;

FIG. 3 is a cross-sectional view taken along line III - III of FIG. 1;

FIG. 4 is a cross-sectional view taken along line IV - IV of FIG. 2;

FIGS. 5 and 6 are graphs showing the spring constant of the suspension device of FIG. 1;

FIG. 7 is a schematic front elevational view of a further suspension device;

FIG. 8 is a schematic front elevational view of a further suspension device;

FIG. 9 is a schematic front elevational view of a further suspension device;

FIG. 10 is a schematic front elevational view of a suspension device according to an embodiment of the present invention;

FIG. 11 is a schematic front elevational view of the suspension device of FIG. 9, showing the manner in which the suspension device operates when the wheels bump; and

FIG. 12 is a schematic front elevational view of a suspension device according to a further embodiment of the present invention. Figures 1-9 do not constitute embodiments of the invention, but are shown merely as examples useful for understanding the invention.

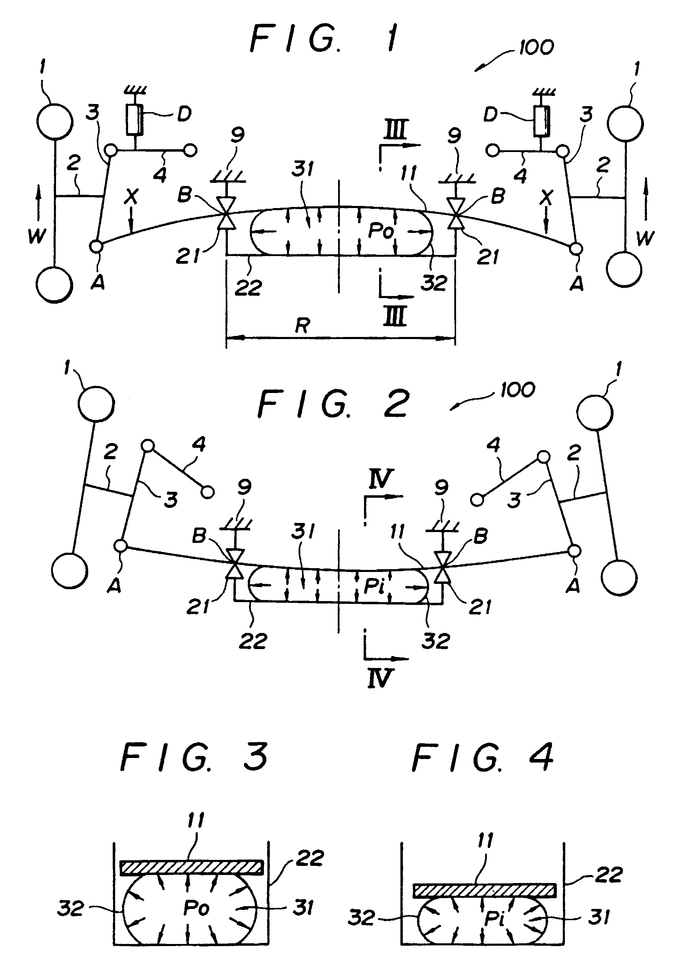

FIG. 1 shows a suspension device, generally denoted at 100 incorporated in a motor vehicle having two laterally spaced road wheels 1 each having an axle 2. The suspension device 100 is shown as comprising two double-wishbone suspensions each having an upper arm 4 on which the upper end of a knuckle 3 with the axle 2 rotatably supported thereon is pivotally supported, and a lower arm 11 on which the lower end of the knuckle 3 is pivotally supported at a point A. The lower arm 11 comprises an elongate leaf spring which is shared by the knuckles 3 associated with the two wheels 1, respectively. The leaf spring 11 has a vertical thickness for making the knuckles 3, i.e., the wheels 1 vertically resilient and a length or longitudinal axis extending in the transverse direction of the motor vehicle. The leaf spring 11 is of an arcuate shape, in its free state, which is slightly convex upwardly. The leaf spring 11 has an intermediate portion supported by support members 21 on a vehicle body 9 so as to be swingable and slidable in the transverse direction of the vehicle. The leaf spring 11 is supported at transversely symmetrical inner points B fixed to the vehicle body 9, with the knuckles 3 supported at the outer points A.

The suspensions have respective dampers D interposed between the upper arms 4 and the vehicle body 9.

The support members 21 are also supported on the vehicle body 9 by means of a support plate 22 mounted on the vehicle body 9. Between the support plate 22 and the intermediate portion of the leaf spring 11 extending between the inner supporting points B, there is disposed a counteracting load mechanism 31 for applying a counteracting load to the leaf spring 11 in a direction opposite to the external force imposed from the wheels 1 by a bump. The support plate 22 is in the form of a rectangular vat. In the illustrated embodiment, the counteracting load mechanism 31 is disposed underneath the supporting points B.

The counteracting load mechanism 31 comprises a bag or container 32 substantially in the shape of a rectangle as viewed in plan with its longer sides extending in the transverse direction of the vehicle, and a fluid filled in the container 32. The container 32 has its lower surface fixed to the support plate 22 against downward movement. For example, the container 32 is made of a nonexpandable flexible material, and the fluid filled in the container 32 is a compressible gas. Alternatively, the container 32 is made of an expandable material, and the fluid filled in the container 32 is a noncompressible liquid.

When the motor vehicle is at rest, the upper surface of the container 32 of the counteracting load mechanism 31 is held in contact with the lower surface of the leaf spring 11, but the counteracting load mechanism 31 is not compressed by the leaf spring 11. In this condition, a static counteracting load $F_0$ applied to the leaf spring under an initial fluid pressure $P_0$ (FIGS. 1 and 3) in the container 32 is $F_0 = 0$, and the wheels 1 are resiliently urged downwardly under the resiliency of the leaf spring 11.

When an upward external force W is applied to the outer ends of the leaf spring 11 by the wheels 1, the opposite end portions and central portion of the leaf spring 11 which are divided by the supporting points B are caused to flex upwardly and downwardly, respectively, and the wheels 1 are moved upwardly, as shown in FIG. 2. Since the central portion of the leaf spring 11 is deformed downwardly, the fluid in the container 32 is compressed by the leaf spring 11 to develop a fluid pressure buildup up to Pi (FIGS. 2 and 4). The fluid pressure P is progressively increased as the amount V by which the central portion of the leaf spring 11 is flexed downwardly is increased. In the range R between the supporting points B, the counteracting load F produced by the counteracting load mechanism 31 is applied as an equally distributed uniform bending stress or an equally uniform distributed load to the leaf spring 11.

If the counteracting load mechanism 31 were not existent, the amount V by which the central portion of the leaf spring 11 is flexed downwardly would be proportional to the magnitude of the upward external force W applied from the wheels 1. However, the pressure P of the fluid in the container 32 becomes progressively higher as the amount V of flexing of the leaf spring 11 increases, and the counteracting load Fi proportional to the pressure Pi acts on the leaf spring 11. As a result, the apparent spring constant K of the leaf spring 11 is continuously increased in proportion to the increase in the external force W. The apparent spring constant of the suspension device 100 is also increased in proportion to the increase in the external force W, resulting in a harder suspension setting.

The apparent spring constant K of the leaf spring 11 will be described below. Only the righthand suspension, shown on the righthand side of line III - III of FIG. 1, will be discussed. As shown in FIG. 1, the leaf spring 11 is shared by the two suspensions to provide a stabilizer function. It is also possible to provide the suspensions with respective leaf springs, and add a stabilizer separately from the leaf springs. Theoretically, the counteracting load mechanism may be arranged to apply a downward counteracting load to points X in FIG. 1 for obtaining the same operation and effects.

It is now assumed that an upward external force W is applied to the outer end of the leaf spring 11 from the righthand wheel 1, so that the suspension device reaches the position of FIG. 2. At this time, the counteracting load F from the counteracting load mechanism 31 and the amount V of downward flexing of the leaf spring 11 between the supporting points B are related to each other as follows:

$$V = (W/k) - a \bullet F \qquad (1)$$

where k is the inherent spring constant of the leaf spring and a is a constant.

Therefore, two different amounts V1, V2 of downward flexing of the leaf spring 11 can be

expressed by:

$$V1 = (W1/k) - a \cdot F1 \quad (2)$$
$$V2 = (W2/k) - a \cdot F2 \quad (2')$$

By subtracting the equation (2) from the equation (2'), we get

$$V2 - V1 = (1/k) \cdot (W2 - W1) - a \cdot (F2 - F1) \quad (3)$$

That is,

$$dV = (dW/k) - a \cdot dF \quad (3')$$

where dV, dW, dF are increases in the amount V of flexing, the upward external force W, and the counteracting load F.

The apparent spring constant K of the leaf spring 11 as it is continuously varied by the counteracting load mechanism 31 is expressed, in relation to the amount V of flexing and the upward external force W, by:

$$V = W/K \quad (4)$$

More precisely, the increases dV, dW of the amount V of flexing and the upward external force W are related as follows:

$$dV = dW/K \quad (4')$$

Since the lefthand side of the equation (4') must be equal to the lefthand side of the equation (3'), the lefthand side of the equation (3') is replaced with the righthand side of the equation (4') to obtain:

$$dW/K = (dW/k) - a \cdot dF \quad (5)$$

By dividing both sides of the equation (5) by dW, we get

$$1/K = (1/k) - a \cdot dF/dW \quad (5')$$

The equation (5') is solved for K as follows:

$$K = k \, dW/(dW - a \cdot k \cdot dF)$$
$$= k/(1 - a \cdot k \cdot dF/dW) \quad (5'')$$

As described above, the value dF/dW is continuously increased in proportion to the increase in the external force W. Therefore, the term $a \cdot k \cdot dF/dW$ in the denominator of the equation (5'') is continuously increased in proportion to the increase in the external force W. As a consequence, the apparent spring constant K of the leaf spring 11 is increased in proportion to the increase in the external force W for a harder suspension setting.

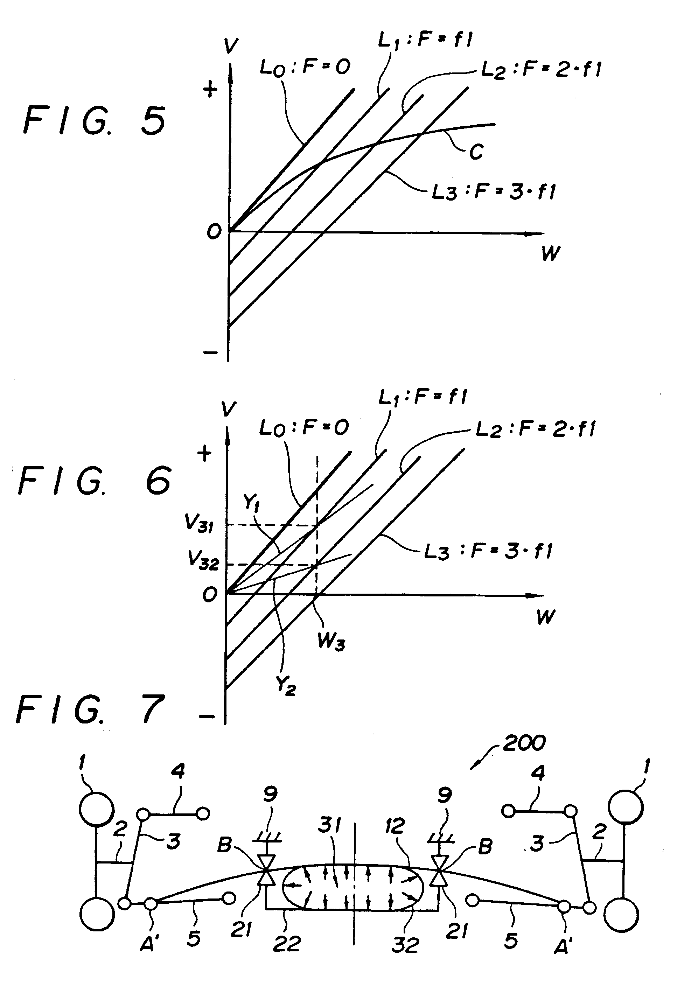

FIG. 5 shows a characteristic curve C representing the relationship between the upward external force W exerted on the outer ends of the leaf spring 11 of the suspension device 100 and the amount V of downward flexing of the central portion of the leaf spring 11 between the supporting points B. The amount V of flexing is positive when the central portion of the leaf spring 11 flexes downwardly. The characteristic curve C indicates that the apparent spring constant K is continuously increased in proportion to the increase in the amount V of flexing due to the increase in the external force W.

By dividing both sides of the equation (3')

$$dV = (dW/k) - a \cdot dF \quad (3')$$

by dW, we obtain

$$dV/dW = 1/k - a \cdot dF/dW \quad (3'')$$

By dividing both sides of the equation (4')

$$dV = dW/K \quad (4')$$

by dW, we obtain

$$dV/dW = 1/K \quad (4'')$$

From the equations (4'') and (3''), the following equation is obtained:

$$dV/dW \ (= 1/K) = 1/k - a \cdot dF/dW \quad (6)$$

dV/dW represents the gradient of a line tangential to the characteristic curve C. Since the term dF/dW is continuously increased in proportion to the increase in the external force W, the gradient dF/dW of the curve C is reduced in proportion to the increase in the external force W, and hence the reciprocal 1/K of the apparent spring constant K is continuously reduced in proportion to the increase in the external force W. This means that the apparent spring constant K is continuously increased in proportion to the increase in the external force W.

FIG. 5 also shows characteristic straight lines L0 (: F = 0), L1 (: F = f1), L2 (: F = 2·f1), and L3 (: F = 3· f1) indicative of the relationship between the external force W and the amount V of flexing when F in the equation (1)

$$V = (W/k) - a \cdot F \quad (1)$$

is fixed at 0 (zero), f1 (prescribed load), 2·f1, and 3·f1, respectively. The first characteristic line L0 shows the relationship between V and W when the counteracting load mechanism 31 is not present. The gradient of the line L0 is equal to the reciprocal 1/K of the inherent spring constant k of the leaf spring 11. The characteristic lines L1, L2, L3 are obtained by attaching weights having weights f1, 2•f1, 3• f1 to the points X (FIG. 1). Since the respective magnitudes of the counteracting load F are constant, the gradients of the straight lines L1, L2, L3 are equal to the gradient of the straight line L0, i.e., the apparent spring constant K of the leaf spring 11 remains unchanged.

The foregoing explanation applies where the initial pressure Pi of the fluid in the counteracting load mechanism 31 is not regulated in any way after the counteracting load mechanism 31 has been installed. However, if the container is made of an expandable material and the fluid filled therein is a noncompressible liquid, and if a mechanism is provided for regulating the initial pressure of the fluid to make constant the rate of increase of the counteracting load F to the increase in the external force W, i.e., dF/dW, then it is possible to adjust the apparent spring constant K of the leaf spring 11 at a certain rate. Such a regulating mechanism should preferably comprise a liquid reservoir, a supply line connecting the liquid reservoir to the container, a pump disposed in the supply line, a check valve disposed in the supply line downstream of the pump, a solenoid valve capable of discharging the liquid from the container, and a controller for controlling the pump and the solenoid valve. With this arrangement, it is possible to establish the characteristics of the leaf spring 11 as indicated by straight lines Y1, Y2 in FIG. 6. The characteristic straight lines Y1, Y2 are selected such that when the external force W applied is of a value W3, the amount V of flexing is of values V31, V32 (V31 > V32), respectively. The gradient 1/K1 of the straight line Y1 and the gradient 1/K2 of the straight line Y2 are constant, as indicated by:

$$1/K1 = V31/W3 \qquad (7)$$
$$1/K2 = V32/W3 \qquad (8)$$

where K1, K2 are apparent spring constants when the leaf spring 11 has the characteristics Y1, Y2, respectively. Since V31 > V32, 1/K1 > 1/K2 and hence K2 > K1. Thus, the leaf spring 11 is harder when its characteristics is indicated by the line Y2 than when its characteristics is indicated by the line Y1.

Employing a counteracting load mechanism with its initial internal pressure regulatable for giving the characteristic straight line Y1 is functionally equivalent to providing coil springs of equal pitch between the leaf spring 11 and the vehicle body for varying or increasing the apparent spring constant K of the leaf spring 11 at a certain rate. It will be understood that by providing such a counteracting load mechanism, it is possible to provide an infinite number of characteristic straight lines passing through the origin and having different gradients in addition to the characteristic straight lines Y1, Y2. With the counteracting load mechanism of this type being incorporated, it is not necessary to use many coil springs of equal pitch, but it is possible to vary the apparent spring constant K of the leaf spring 11 as desired at a certain rate.

In the illustrated suspension device 100, the lower arm which is one component thereof comprises the leaf spring 11 which gives the wheels 1 vertical resiliency. Therefore, it is possible to provide dampers without any coil springs combined therewith. This allows the upper arms of the double-wishbone suspensions to be positioned with greater freedom.

As described above, the suspension 100 includes the counteracting load mechanism 31 for applying, to the leaf spring 11, the counteracting load F which is progressively increased dependent on the amount V of flexing of the leaf spring 11. Therefore, the apparent spring constant K of the leaf spring 11 is continuously increased in proportion to the increase in the external force W, thus providing desired damping characteristics. If the initial vertical width of the container 32 and the initial internal pressure thereof are constant, then the counteracting load F generated by the counteracting load mechanism 31 dependent on the amount V of flexing of the leaf spring 11 is substantially proportional to the area of the container 32 as viewed in plan. Consequently, by increasing or reducing the area of the container 32 as viewed in plan, the characteristics with which the apparent spring constant K of the leaf spring 11 varies can be modified. Likewise, even if the area of the container 32 as viewed in plan is constant, the characteristics with which the apparent spring constant K of the leaf spring 11 varies can be modified by increasing or reducing the initial internal pressure P0 of the container 32.

By employing a counteracting load mechanism in which the rate at which the counteracting load F increases with an increase in the external force W, i.e., the value dF/dW is constant, the apparent spring constant K of the leaf spring 11 can be varied without using a number of coil springs of equal pitch.

Since the counteracting load mechanism 31 comprises the container 32 and the fluid filled therein, the counteracting load F is applied as an equally distributed uniform load, but not as a point load, to the leaf spring 11. Therefore, the counteracting load can be imposed on the leaf spring 11 while avoiding any stress concentration on the leaf spring 11. The counteracting load mechanism may be positioned anywhere insofar as it can apply the counteracting load to the leaf spring in a direction which counteracts the upward external force applied from the wheels.

The single leaf spring 11 serves as the lower arms of the laterally spaced suspensions. As a consequence, the leaf spring 11 functions as a stabilizer, and any stabilizer which would otherwise normally be provided separately from the suspension lower arms is not needed. Thus, the suspension device is small in size and lightweight. The single leaf spring 11 also permits the single counteracting load mechanism 31 to be shared by the laterally spaced suspensions.

The lower arms of the suspensions may not be constructed as a leaf spring, but a leaf spring separate from the lower arms may be coupled to the lower arms, as will be described later with reference to a second embodiment. The upper arms of the suspensions may be constructed as a leaf spring, or a leaf spring separate from the upper arms may be coupled to the upper arms.

Even if the counteracting load mechanism 31 is dispensed with, dampers without any coil springs may be employed. The counteracting load mechanism comprising the container and the fluid filled therein, as described above, may be replaced with a coil spring of irregular pitch interposed between the leaf spring and the vehicle body.

A plurality of containers may be disposed on the support plate 22 at laterally spaced locations, and the fluid filled in the containers may be of different initial pressure settings. According to this alternative, the apparent spring constants of the laterally spaced suspensions may be varied independently. Alternatively, a plurality of counteracting load mechanisms may be disposed on the leaf spring at appropriate positions.

The present invention is applicable to not only double-wishbone suspensions, but also any of various other suspension types such as strut suspensions. The leaf spring may not be supported on the vehicle body at the two symmetrical points B, as with the above embodiment, but at an even number of symmetrical points, such as four points. Rather than a common leaf spring shared by two laterally spaced suspensions, a common leaf spring shared by two longitudinally spaced suspensions on one side of the vehicle may be employed.

FIG. 7 schematically illustrates a suspension device 200 shown as an example useful for understanding the invention. Those parts of FIG. 7, and also those of subsequent figures, which are identical to those of the suspension device 100 of Fig. 1 are denoted by identical reference numerals, and will not be described in detail.

The suspension device 200 includes a single elongate leaf spring 12 separate from lower arms 5 of two laterally spaced suspensions. The leaf spring 12 has its opposite ends pivotally coupled to portions of the lower arms 5 at respective points A' which are symmetrically disposed in the transverse direction of the motor vehicle. Dampers without coil springs, which are disposed between the upper arms 4 and the motor vehicle body are omitted from illustration.

The suspension device 200 offers the same advantages as those of the suspension device 100 of the first embodiment except that the lower arms of the susensions are constructed as a single leaf spring according to the first embodiment.

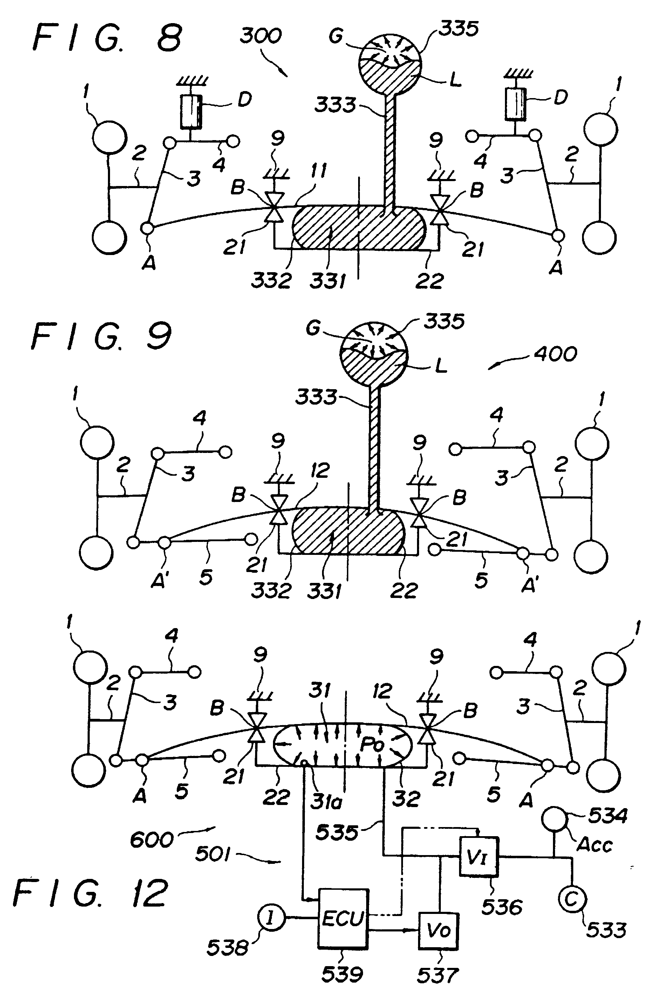

A suspension device 300 not forming an embodiment of the invention, but merely shown as an example useful for understanding the invention is schematically shown in FIG. 8. The suspension device 300 includes a counteracting load mechanism 331 which comprises a bag or container 332 disposed between a leaf spring 11 and a support plate 22 and extending transversely of the vehicle, a subtank 335 mounted on the vehicle body, and a joint tube 333 through which the container 332 and the subtank 335 are held in fluid communication with each other. The container 332, the joint tube 333, and the subtank 335 are made of a nonexpandable flexible material, and filled with a noncompressible fluid L comprising a liquid. The subtank 335 is positioned upwardly of the container 332 and also filled with a compressible fluid G comprising a gas.

When the central portion of the leaf spring 11 is flexed downwardly, the volume of liquid L which is proportional to the amount V by which the leaf spring 11 is flexed is forced out of the container 332 through the joint tube 333 into the subtank 335, thus compressing the gas G therein. The pressure of the gas G is progressively increased as the amount V of flexing of the leaf spring 11 is increased. Therefore, the counteracting load mechanism 331 offers the same advantages as those of the counteracting load mechanism 31 shown in FIG. 1.

The counteracting load is generated by the subtank 335. Accordingly, the volume of the container 332 and hence the vertical thickness thereof under its initial condition are reduced as much as possible. Even if the container 332 is disposed beneath the leaf spring 11, therefore, the distance by which the support plate 22 is spaced downwardly from the vehicle body 9 is minimized, and the minimum height of the vehicle from ground is not largely affected by the support plate 22.

The joint tube 333 generates a certain degree of resistance to the flow of the liquid L therethrough. For this reason, the counteracting load mechanism 331 additionally provide a damper function, and the entire volume of the counteracting load mechanism 331 is reduced. The damping capability of the counteracting load mechanism 331 may be varied by changing the diameter of the joint tube 333.

The container 332, the joint tube 333, and the subtank 335 which are made of a nonexpandable flexible material may be filled only with a compressible fluid comrising a gas.

FIG. 9 schematically shows a suspension device 400 not forming an embodiment of the invention, but shown merely as an example useful for understanding the invention. The suspension device 400 basically comprises the suspension device shown in FIG. 7 with its counteracting load mechanism 31 replaced with the counteracting load mechanism 331 shown in FIG. 8. The suspension device 400 has the advantages of the suspension device 200 shown in FIG. 7 and the advantages of the counteracting load mechanism 331 illustrated in FIG. 8.

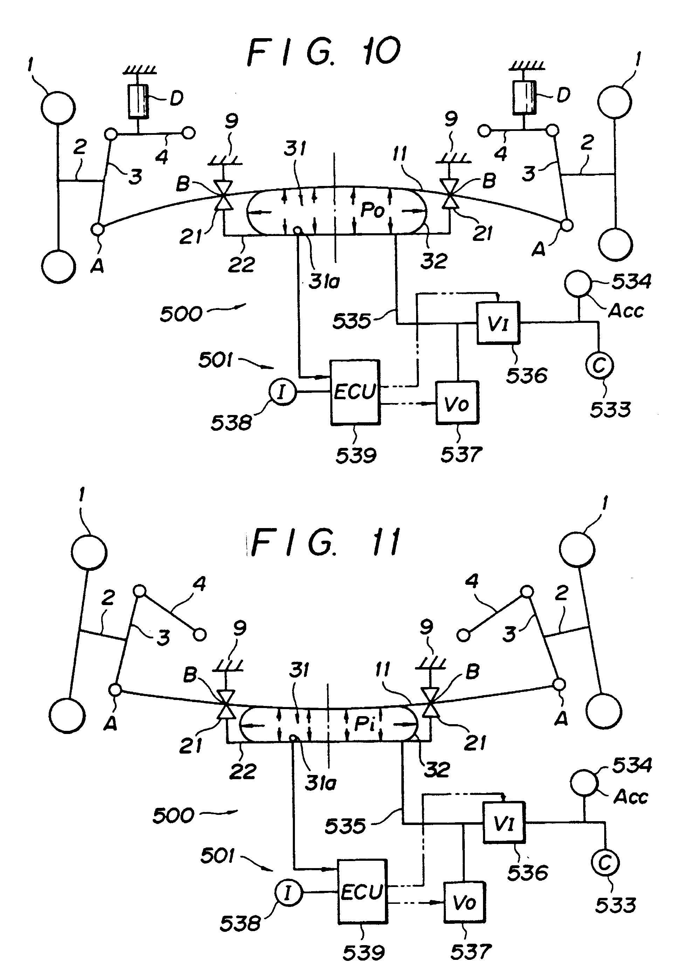

FIGS. 10 and 11 schematically show a suspension device 500 according to an embodiment of the present invention, when the wheels are at rest and bump, respectively. The suspension device 500 comprises the suspension device 100 shown in FIG. 1 with a vehicle height adjusting mechanism 501 added.

The vehicle height adjusting mechanism 501 comprises a pressure source composed of a compressor 533 and an accumulator 534, a line 535 connecting the pressure source to the container 32, an inlet valve 536 disposed in the line 535 between the pressure source and the container 32, an outlet valve 537 by which the line 535 can be vented to atmosphere, and a controller 539 responsive to input information I from a manual control panel (not shown) and signals from a pressure sensor 31a which detects the internal pressure in the container 31 and a vehicle height sensor, for selectively actuating the valves 536, 537.

When a manual/automatic command from the non-illustrated control panel is applied to the controller 539, the controller 539 opens the inlet valve 536 and closes the outlet valve 537, whereupon a certain amount of gas under pressure is supplied into the container 32 to develop a pressure buildup therein. When the controller 539 opens the outlet valve 537 and closes the inlet valve 536, a certain amount of gas is discharged from the container 32 to reduce the internal pressure P therein.

For example, when the load weight on the vehicle is increased to reduce the vehicle height below a reference height, the gas under pressure is automatically supplied to the container 32 to increase its inner static pressure P. Or, when the vehicle is to start running over rough terrain, the gas under pressure is manually supplied to the container 32 to increase its inner static pressure P. Upon an increase in the internal pressure P of the container 32, the portion of the leaf spring 11 between the supporting points B is elevated, and hence the outer portions of the leaf spring 11 which are positioned outwardly of the supporting points B are depressed to lower the wheels 1. As a result, the vehicle height is relatively increased. Thus, when the gas under pressure is supplied into the container 32, the initial counteracting load or static counteracting load F0 produced by the counteracting load mechanism 31 is increased up to a value corresponding to the increased internal pressure P. Since the distances between the points B and the center of the leaf spring 11 are practically smaller than the distances between the points B and A, the points A are displaced downwardly over an amplified stroke by a small upward displacement of the leaf spring 11 caused by the counteracting load mechanism 31.

Irrespective of a vehicle height setting, the counteracting load mechanism 31 continuously increases the apparent spring constant K of the leaf spring 11 in proportion to the increase in the amount V of flexing of the leaf spring 11. The characteristic curve C shown in FIG. 5 is realized with a reference load weight on the vehicle and an initial reference vehicle height of the vehicle. It is assumed that the pressure in the container 32 is increased to a certain value by the vehicle height adjusting mechanism 501 until the initial counteracting load F becomes F = f1 in order to set the vehicle height to the reference vehicle height while the load weight is on the increase. The characteristic curve of the suspension device 500 at this time is equal to a portion of the curve C (FIG. 5) on the righthand side of the line F = f1, as plotted from the origin O.

The suspension device 500 offers the same advantages as those of the suspension device 100 shown in FIG. 1. Since the counteracting load mechanism 31 can be used as one component of the vehicle height adjusting mechanism 501, the vehicle height adjusting mechanism 501 is simple in structure, lightweight, and inexpensive to manufacture. These advantages manifest themselves particularly when the lower arms are in the form of a single leaf spring 11 and a single counteracting load mechanism 31 is employed, as shown.

The counteracting load mechanism 31 is constructed as the container 32 for applying the couteracting load F as an unfixed equally distributed load to the leaf spring. Therefore, the stabilizer function of the leaf spring 11 is well maintained even when the vehicle height is varied.

More specifically, where an actuator such as a hydraulic cylinder unit or the like is smployed as the counteracting load mechanism and the counteracting load generated by the counteracting load mechanism is exerted as a point load on the leaf spring, the joint between the leaf spring 11 and the actuator is virtually fixed. Therefore, the portion of the leaf spring 11 between the supporting points B is also virtually fixed, and the vertical swinging movement of the leaf spring 11 at the supporing points A is effected while the leaf spring 11 is virtually fixed at the supporting points B. As a result, the mode of deformation of the leaf spring 11 after vehicle height adjustment changes from the mode of deformation thereof before vehicle height adjustment. Stated otherwise, the suspension function after vehicle height adjustment is different from that before vehicle height adjustment, and the stabilizer function is reduced. In the above embodiment, however, vertical swinging movement at the supporting points A of the leaf spring 11 when the wheels 1 bump and rebound is converted to sliding movement and angular movement of the leaf spring 11 at the supporting points B. Moreover, the counteracting load mechanism 31 includes a compressible fluid filled in a nonexpandable container 32 or a noncompressible fluid filled in an expandable container 32. Therefore, the counteracting load mechanism 31 can follow bending displacent of the leaf spring 11 between the supporting points B through the action of the pressure P in the container 32. As a consequence, even with vehicle height adjustment effected, the leaf spring 11 moved vertically substantially freely between the supporting points B. More specifically, when the wheels 1 rebounce downwardly after vehicle height adjustment, the portion of the leaf spring 11 between the supporting points B is curved upwardly. The container 32 then follows such upwardly curved displacement of the leaf spring 11 under reactive forces due to the fluid pressure P in the container 32. Conversely, when the wheels 1 bump upwardly, the portion of the leaf spring 11 between the supporting points B is curved downwardly. If the container 32 is nonexpandable and the fluid filled therein is a compressible fluid, then the container 32 follows the downwardly curved displacement of the leaf spring 11 due to compressive deformation of the compressible fluid. If the container 32 is expandable and the fluid filled therein is a noncompressible fluid, then the container 32 follows the downwardly curved displacement of the leaf spring 11 due to expansive deformation of the container 32. At any race, the leaf spring 11 is freely curved downwardly. Therefore, the mode of deformation of the leaf spring 11, even after vehicle height adjustment is effected, remains substantially the same as the mode of deformation of the leaf spring 11 when the vehicle height is not adjusted. Accordingly, irrespective of whether vehicle height adjusting is done or not, the suspension function and the stabilizer function of the suspension device are maintained.

The vehicle height may be lowered as required by adding an auxiliary counteracting means for applying a downward bending stress or load to the central portion of the leaf spring 11. The heights of the two laterally spaced suspensions can independently be adjusted by placing a plurality of bags or containers on the support plate 22 at two laterally spaced locations and independently regulating the internal pressures of the containers. Such a modification is particularly useful for leveling the vehicle body when a heavy object is placed on the vehicle transversely off the center thereof.

FIG. 12 schematically shows a suspension device 600 according to a further embodiment of the present invention. The suspension device 600 comprises the suspension device 200 shown in FIG. 7 with the vehicle height adjusting mechanism 501 of FIG. 10 added thereto.

The suspension device 600 offers the same advantages as those of the suspension device 200 shown in FIG. 7 and also the same advantages as those of the vehicle height adjusting mechanism 501 shown in FIG. 10.

It is also possible to adjust the height of the vehicle by employing the counteracting load mechanism 331 shown illustrated in FIG. 8.

Although there have been described what are at present considered to be the preferred embodiments of the present invention, it will be understood that the invention may be embodied in other specific forms without departing from the scope of the invention as claimed. The present embodiments are therefore to be considered in all aspects as illustrative, and not restrictive. The scope of the invention is indicated by the appended claims rather than by the foregoing description.

## Claims

1. A suspension device for a motor vehicle having road wheels (1) and a vehicle body (9), comprising:
   - an elongate resilient member (11;12) extending transversely across said vehicle body (9) and having opposite ends coupled respectively to two laterally spaced wheel support members (3), said resilient member (11;12) having a vertically resilient characteristic and serving as a suspension component to which vertical movement of the road wheels is transmitted,
   - support means supporting an intermediate portion (B-B) of said elongate resilient member on said vehicle body (9) at at least two laterally spaced points (C) on said intermediate portion (B-B) whereby under a certain external force (W) applied from said road wheel said resilient member flexes a certain amount (V),

- counteracting load means for applying a counteracting load (F) to said resilient member dependent on said amount of flexing (V) of said resilient member wherein the rate (dF/dW) of increase in said counteracting load (F) of said counteracting load means when subjected to an increase in said external force (W) from said road wheel is variable,

**characterized in that**

said counteracting load means comprises a container (32) made of an expandable material filled with a non-compressible fluid or a container (32;332) made of non-expandable material filled with a compressible fluid, said container being operatively interposed between said resilient member (11,12) and said vehicle body whereby a mechanism is provided for regulating the internal pressure (P) of said fluid container such that the apparent spring constant (K) of said elongate resilient member (11;12) can be actively varied by increasing or reducing the internal pressure (P) of said container (32) during spring operation.

2. A suspension device according to claim 1, wherein the rate (dF/dW) is adjustable to different constant values.

3. A suspension device according to any of the preceding claims, wherein said counteracting load means (31,331) applies said counteracting load (F) to said component (11,12) in a direction opposite to the direction in which said road wheel (1) exerts the external force (F) on said component (11;12) when the road wheel (1) bumps.

4. A suspension device according to any of the preceding claims, wherein said counteracting load means (331) further comrpises a subtank (335) mounted on said vehicle body (9) and communicating with said container (332).

5. A suspension device (300;400) according to claim 4, wherein said counteracting load means (331) further comprises a joint tube (333) through which said container (332) communicates with said subtank (335) and which presents resistance to the flow of said fluid therethrough.

6. A suspension device according to any of the preceding claims, wherein said elongate resilient member (11;12) comprises a leaf spring (11;12) extending transversely of the motor vehicle, wherein said counteracting load means (31;331) is interposed between a portion of the leaf spring which is positioned between said laterally spaced points (C) in the transverse direction of said motor vehicle, and a portion (22) of said vehicle body which is positioned downwardly of said portion of the leaf spring.

7. A suspension device (100;200;300;400;500;600) according to any of the preceding claims, said suspension device (100;200;300;400;500;600)comprising two laterally spaced suspensions,

each of said suspensions comprising said support member (3), an upper arm (4) and a lower arm (11;5) which have outer ends supporting said support member (3).

8. A suspension device (100;300;500) according to claim 7, wherein said elongate resilient member (11) comprises a single elongate leaf spring (11) extending transversely of the motor vehicle, the lower arms of said suspensions comprising said elongate leaf spring (11).

9. A suspension device (200;400;600) according to claim 7, wherein said elongate resilient member (12) comprises an elongate leaf spring (12) extending transversely of the motor vehicle and having outer ends coupled to said lower arms (5) of said suspensions.

10. A suspension device (500;600) according to any one of the preceding claims further including a vehicle height adjusting mechanism (501) operatively coupled to said counteracting load means (31) for vayring a static counteracting load (FO) of said counteracting load means (31) when said motor vehicle is at rest, to vertically displace said intermediate portion (B-B) for adjusting the height of the motor vehicle.

11. A suspension device (500;600) according to any one of the preceding claims, wherein said counteracting load means (31) is capable of freely following vertical flexing movements of said intermediate portion (B-B) of said component (11;12).

**Patentansprüche**

1. Aufhängungsvorrichtung für ein Kraftfahrzeug mit Straßenrädern (1) und einem Kraftfahrzeugrumpf (9), umfassend:

- ein sich quer durch den Kraftfahrzeugrumpf (9) erstreckendes, langgestrecktes, elastisches Element (11;12), das entgegengesetzte jeweils mit zwei seitlich beabstandeten Radtrageelementen (3) verbundene Enden aufweist, wobei das elastische Element (11;12) eine vertikal elastische Charakteristik aufweist und als Aufhängungskomponente dient, auf welche eine vertikale Bewegung der Straßenräder übertragen wird,

- Halteeinrichtungen, die einen Zwischenabschnitt (B-B) des langgestreckten, elastischen Elements an dem Kraftfahrzeugrumpf (9) in wenigstens zwei seitlich beabstandeten Punkten (C) auf dem Zwischenabschnitt (B-B) halten, wobei unter einer bestimmten, von den Straßenrädern angelegten, externen Kraft (W) das elastische Element sich um einen bestimmten Betrag (V) verbiegt,

- eine Gegenbelastungs-Einrichtung zum Anlegen einer Gegenbelastung (F), die von dem Betrag (V) der Verbiegung des elastischen Elements abhängt, an das elastische Element, wobei die Rate (dF/dW) der Zunahme der Gegenbelastung (F) der Gegenbelastungs-Einrichtung variabel ist, wenn diese einer Zunahme der externen Kraft (W) von den Straßenrädern unterliegt,

**dadurch gekennzeichnet,**

daß die Gegenbelastungs-Einrichtung ein Behältnis (32) umfaßt, welches aus einem dehnbaren Material hergestellt ist und mit einem nicht kompressiblen Fluid gefüllt ist, oder ein Behältnis (32;332), das aus einem nicht dehnbaren Material hergestellt ist und mit einem kompressiblen Fluid gefüllt ist, wobei das Behältnis betriebsmäßig zwischen dem elastischen Element (11;12) und dem Kraftfahrzeugrumpf angeordnet ist, wobei eine Vorrichtung zum Regulieren des Innendrucks (P) des Fluidbehältnisses vorgesehen ist, so daß die in Erscheinung tretende (scheinbare) Federkonstante (K) des langgestreckten, elastischen Elements (11;12) durch Erhöhen oder Vermindern des Innendrucks des Behältnisses (32) während des Federbetriebs aktiv verändert werden kann.

2. Aufhängungsvorrichtung nach Anspruch 1, worin die Rate (dF/dW) auf verschiedene konstante Werte einstellbar ist.

3. Aufhängungsvorrichtung nach einem oder mehreren der vorhergehenden Ansprüche, worin die Gegenbelastungs-Einrichtung (31;331) die Gegenbelastung (F) an die Komponente (11;12) in einer Richtung anlegt, welche der Richtung, in welcher das Straßenrad (1) die externe Kraft (F) auf die Komponente (11;12) ausübt, wenn das Straßenrad (1) stößt, entgegengesetzt ist.

4. Aufhängungsvorrichtung nach einem oder mehreren der vorhergehenden Ansprüche, worin die Gegenbelastungs-Einrichtung (331) ferner einen Nebenbehälter (335) umfaßt, welcher an dem Kraftfahrzeugrumpf (9) angebracht ist und mit dem Behältnis (332) in Verbindung steht.

5. Aufhängungsvorrichtung (300;400) nach Anspruch 4, worin die Gegenbelastungs-Einrichtung (331) ferner eine Verbindungsleitung (333) umfaßt, durch welche das Behältnis (332) mit dem Nebenbehälter (335) verbunden ist, und welche für den Fluß des Fluids durch dasselbe einen Widerstand darstellt.

6. Aufhängungsvorrichtung nach einem oder mehreren der vorhergehenden Ansprüche, worin das langgestreckte, elastische Element (11;12) eine sich quer zu dem Kraftfahrzeug erstreckende Blattfelder (11;12) umfaßt, worin die Gegenbelastungs-Einrichtung (31;331) zwischen einem Abschnitt auf der Blattfeder, der zwischen den seitlich beabstandeten Punkten (C) in einer Richtung quer zu dem Kraftfahrzeug angeordnet ist, und einem Abschnitt (22) des Kraftfahrzeugrumpfs, der unterhalb dem Abschnitt der Blattfeder angeordnet ist, angeordnet ist.

7. Aufhängungsvorrichtung (100;200;300;400;500;600) nach einem oder mehreren der vorhergehenden Ansprüche, wobei die Aufhängungsvorrichtung (100;200;300;400;500;600) zwei seitlich beabstandete Aufhängungen umfaßt, wobei jede der Aufhängungen das Trageelement (3), einen oberen Arm (4) und einen unteren Arm (11;5), welche äußere, das Trageelement (3) tragende Enden aufweisen, umfaßt.

8. Aufhängungsvorrichtung (100;300;500) nach Anspruch 7, worin das langgestreckte, elastische Element (11) eine einzige sich quer zu dem Kraftfahrzeug erstreckende, langgestreckte Blattfeder (11) umfaßt, wobei die unteren Arme der Aufhängungen die langgestreckte Blattfeder (11) umfassen.

9. Aufhängungsvorrichtung (200;400;600) nach Anspruch 7, worin das langgestreckte, elastische Element (12) eine sich quer zu dem Kraftfahrzeug erstreckende, langgestreckte Blattfeder (12) umfaßt, welche mit den unteren Armen (5) der Aufhängungen verbundene, äußere Enden aufweist.

**10.** Aufhängungsvorrichtung (500;600) nach einem oder mehreren der vorhergehenden Ansprüche, welche ferner eine mit der Gegenbelastungs-Einrichtung (31) betriebsmäßig verbundene Vorrichtung (501) zur Kraftfahrzeug-Niveauregulierung umfaßt, zum Verändern einer statischen Gegenbelastung (FO) der Gegenbelastungs-Einrichtung (31), wenn sich das Kraftfahrzeug in Ruhe befindet, um den Zwischenabschnitt (B-B) zur Regulierung des Niveaus des Kraftfahrzeugs vertikal zu verschieben.

**11.** Aufhängungsvorrichtung (500;600) nach einem oder mehreren der vorhergehenden Ansprüche, worin die Gegenbelastungs-Einrichtung (31) in der Lage ist, den vertikalen Biege-Bewegungen des Zwischenabschnitts (B-B) der Komponente (11;12) frei zu folgen.

**Revendications**

**1.** Dispositif de suspension pour un véhicule à moteur présentant des roues (1) et une caisse (9), comprenant :

- une pièce élastique longiligne (11 ; 12) s'étendant transversalement en travers de ladite caisse (9) du véhicule, et comportant des extrémités opposées respectivement accouplées à deux pièces (3) de support des roues, espacées latéralement, ladite pièce élastique (11 ; 12) présentant une caractéristique d'élasticité verticale, et faisant office d'un élément constitutif de la suspension auquel est transmis un mouvement vertical des roues,
- un moyen de support supportant une région médiane (B-B) de ladite pièce élastique longiligne sur ladite caisse (9) du véhicule, en au moins deux points (C) latéralement distants sur ladite région médiane (B-B), de sorte que, sous l'action d'une certaine force extérieure (W) provenant desdites roues, ladite pièce élastique fléchit selon une certaine grandeur (V),
- un moyen d'équilibrage de charge destiné à imposer, à ladite pièce élastique, une charge antagoniste (F) dépendant de ladite grandeur (V) de la flexion de cette pièce élastique, le rapport (dF/dW) de l'augmentation, intervenant dans ladite charge antagoniste (F) dudit moyen d'équilibrage de charge, étant variable lors d'un accroissement intervenant dans ladite force extérieure (W) provenant desdites roues,

caractérisé par le fait que ledit moyen d'équilibrage de charge présente un réceptacle (32) fabriqué en un matériau expansible et empli d'un fluide incompressible, ou bien un réceptacle (32 ; 332) fabriqué en un matériau non expansible et empli d'un fluide compressible, ledit réceptacle étant efficacement interposé entre ladite pièce élastique (11, 12) et ladite caisse du véhicule, ce qui fournit un mécanisme pour réguler la pression interne (P) dudit réceptacle à fluide, de telle sorte que la constante élastique apparente (K) de ladite pièce élastique longiligne (11 ; 12) puisse être positivement modifiée en augmentant ou en réduisant la pression interne (P) dudit réceptacle (32) lors du fonctionnement élastique.

**2.** Dispositif de suspension selon la revendication 1, dans lequel le rapport (dF/dW) est ajustable à différentes valeurs constantes.

**3.** Dispositif de suspension selon l'une quelconque des revendications précédentes, dans lequel ledit moyen (31, 331) d'équilibrage de charge impose ladite charge antagoniste (F), audit élément constitutif (11, 12), dans une direction opposée à la direction dans laquelle ladite roue (1) applique la force extérieure (F) audit élément constitutif (11 ; 12) lorsque cette roue (1) rencontre un obstacle.

**4.** Dispositif de suspension selon l'une quelconque des revendications précédentes, dans lequel ledit moyen (331) d'équilibrage de charge présente, par ailleurs, un réservoir auxiliaire (335) monté sur ladite caisse (9) du véhicule et communiquant avec ledit réceptacle (332).

**5.** Dispositif de suspension (300 ; 400) selon la revendication 4, dans lequel ledit moyen (331) d'équilibrage de charge présente, en outre, un tube de jonction (333) par l'intermédiaire duquel ledit réceptacle (332) communique avec ledit réservoir auxiliaire (335), et qui oppose une résistance au flux dudit fluide le parcourant.

**6.** Dispositif de suspension selon l'une quelconque des revendications précédentes, dans lequel ladite pièce élastique longiligne (11 ; 12) comprend une lame de ressort (11 ; 12) s'étendant dans le sens transversal du véhicule à moteur ; dispositif dans lequel ledit moyen (31 ; 331) d'équilibrage de charge est interposé entre une région de la lame de ressort, qui se trouve entre lesdits points (C) latéralement distants dans le sens transversal dudit véhicule à moteur, et une région (22) de ladite caisse du véhicule qui occupe une position basse par rapport à ladite région de la lame de ressort.

7. Dispositif de suspension (100 ; 200 ; 300 ; 400 ; 500 ; 600) selon l'une quelconque des revendications précédentes, ledit dispositif de suspension (100 ; 200 ; 300 ; 400 ; 500 ; 600) comprenant deux suspensions latéralement espacées, chacune desdites suspensions comprenant ladite pièce de support (3), un bras supérieur (4) et un bras inférieur (11 ; 5) dont des extrémités externes soutiennent ladite pièce de support (3).

8. Dispositif de suspension (100 ; 300 ; 500) selon la revendication 7, dans lequel ladite pièce élastique longiligne (11) comprend une unique lame de ressort longiligne (11) s'étendant dans le sens transversal du véhicule à moteur, les bras inférieurs desdites suspensions comprenant ladite lame de ressort longiligne (11).

9. Dispositif de suspension (200 ; 400 ; 600) selon la revendication 7, dans lequel ladite pièce élastique longiligne (12) comprend une lame de ressort longiligne (12) s'étendant dans le sens transversal du véhicule à moteur, et présentant des extrémités externes accouplées auxdits bras inférieurs (5) desdites suspensions.

10. Dispositif de suspension (500 ; 600) selon l'une quelconque des revendications précédentes, présentant en outre un mécanisme (501) de réglage de la hauteur du véhicule, en liaison interactive avec ledit moyen (31) d'équilibrage de charge pour faire varier une charge antagoniste statique (F0) dudit moyen (31) d'équilibrage de charge lorsque ledit véhicule à moteur est au repos, de manière à déplacer verticalement ladite région médiane (B-B) en vue de régler la hauteur du véhicule à moteur.

11. Dispositif de suspension (500 ; 600) selon l'une quelconque des revendications précédentes, dans lequel ledit moyen (31) d'équilibrage de charge est en mesure de suivre librement des mouvements verticaux de flexion de ladite région médiane (B-B) dudit élément constitutif (11 ; 12).

F I G. 1

F I G. 2

F I G. 3

F I G. 4

EP 0 291 886 B1

FIG. 5

FIG. 6

FIG. 7

14

EP 0 291 886 B1

FIG. 8

FIG. 9

FIG. 12

# F I G. 10

# F I G. 11